# EUROPEAN PATENT APPLICATION

(11) **EP 2 191 993 A1**
(43) Date of publication of application: **02.06.2010**
(21) Application number: 07764094.4
(22) Date of filing: 19.07.2007
(51) Int. Cl.: B60J 7/12, B60P 7/02

(54) **MULTI-FUNCTION VEHICLE CANOPY**

(71) Applicant: Ting, San-Lang, Taiwan 51645 (CN)
(72) Inventor: Ting, San-Lang, Taiwan 51645 (CN)
(74) Representative: Lang, Christian
(86) International application number: PCT/CN2007/002207
(87) International publication number: WO 2009/009930

(57) **Abstract**

A platform truck or trailer is equipped with a folding top including at least one piece of canvas supported on a collapsible framework. The collapsible framework includes two longitudinal tubes, a transverse tube extending between the longitudinal tubes, a motor connected to the transverse tube, and telescopic units. Each of the telescopic units includes an external tube connected to a related one of the longitudinal tubes, an internal tube inserted in the external tube, a threaded bolt located in the external and internal tubes and operatively connected to the motor, and a threaded sheath located in the internal tube and engaged with the threaded bolt.

## Description

### BACKGROUND OF INVENTION

### 1. FIELD OF INVENTION

The present invention relates to a collapsible framework of a folding top for a platform truck.

### 2. RELATED PRIOR ART

A platform truck includes a platform for carrying cargo such as packages. A platform truck is welcome for a relative low price and ease uploading and downloading of the cargo. A piece of canvas is often carried on the platform truck and, if necessary, used to protect the cargo from sun light and rain and to keep the cargo on the platform.

Where the cargo cannot be subjected to intensive sun light, a driver spreads the piece of canvas over the good before he or she hits the road. Otherwise, the piece of canvas is folded in good weather and spread over the cargo on rainy or cloudy days. Rain however comes suddenly sometimes. In such a case, the driver has to stop the platform truck to spread the piece of canvas over the cargo. The piece of canvas is heavy, and this is particularly true for a large platform truck. It is difficult and sometimes dangerous for the driver alone to spread the piece of canvas over the cargo. Moreover, some of the cargo inevitably gets wet before it is shielded with the piece of canvas.

A folding top can be used instead of the simple piece of canvas. The folding top includes at least one piece of canvas supported on a framework connected to the platform of the platform truck. The use of the folding top is however not without problems. The folding top is more expensive than the simple piece of canvas. The folding top entails more aerodynamic assistance than the simple piece of canvas folded. The folding top interferes with the driver's maneuvering of the cargo worse than the simple piece of canvas.

The present invention is therefore intended to obviate or at least alleviate the problems encountered in prior art.

### SUMMARY OF INVENTION

It is the primary objective of the present invention to provide a platform truck with a folding top including at least one piece of canvas supported on a collapsible framework.

To achieve the foregoing objective, the collapsible framework includes two longitudinal tubes, a transverse tube extending between the longitudinal tubes, a motor connected to the transverse tube, and telescopic units. Each of the telescopic units includes an external tube connected to a related one of the longitudinal tubes, an internal tube inserted in the external tube, a threaded bolt located in the external and internal tubes and operatively connected to the motor, and a threaded sheath located in the internal tube and engaged with the threaded bolt.

Other objectives, advantages and features of the present invention will become apparent from the following description referring to the attached drawings.

### BRIEF DESCRIPTION OF DRAWINGS

The present invention will be described via detailed illustration of embodiments referring to the drawings where:
FIG. 1 is a perspective view of a platform truck equipped with a folding top including at least one piece of canvas supported on a collapsible framework according to the first embodiment of the present invention;
FIG. 2 is a perspective view of the collapsible framework in a collapsed position other than the extended position shown in FIG. 1;
FIG. 3 is a partial, exploded view of the collapsible framework shown in FIG. 1;
FIG 3A is a partial, exploded view of a collapsible framework according to the second embodiment of the present invention;
FIG. 3B is a partial, exploded view of a collapsible framework according to the third embodiment of the present invention;
FIG. 3C is a partial, exploded view of a collapsible framework according to the fourth embodiment of the present invention;
FIG 3D is a partial, exploded view of a collapsible framework according to the fifth embodiment of the present invention;
FIG. 4 is a perspective view of a platform truck equipped with a folding top including a collapsible framework according to the sixth embodiment of the present invention;
FIG. 5 is a perspective view of the collapsible framework in collapsed position other than the extended position shown in FIG. 4;
FIG. 6 is a partial, exploded view of the collapsible framework shown in FIG. 4;
FIG. 7 is a perspective view of a platform truck equipped with a folding top including a collapsible framework according to the seventh embodiment of the present invention; and
FIG. 8 is a perspective view of a platform truck equipped with a folding top including a collapsible framework according to the eighth embodiment of the present invention.

### DETAILED DESCRIPTION OF EMBODIMENTS

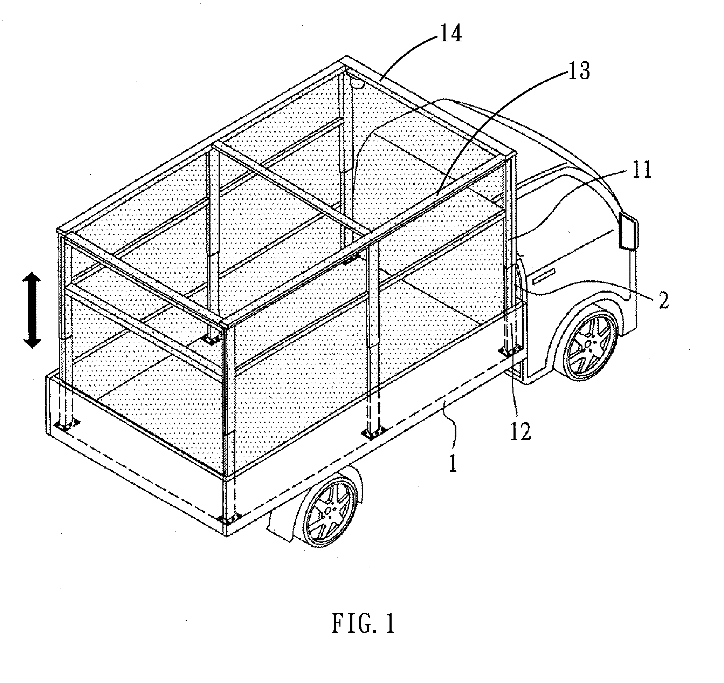

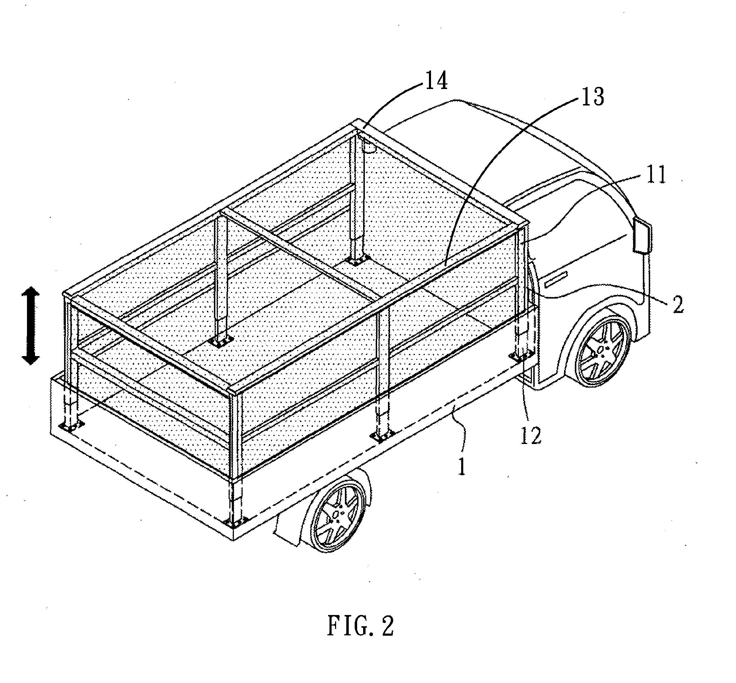

Referring to FIGS. 1 and 2, a platform truck is equipped with a folding top including pieces of canvas supported on a collapsible framework according to a first embodiment of the present invention. The collapsible framework includes two longitudinal tubes 13, a transverse tube 14 extending between the longitudinal tubes 13, and several telescopic units 2 for supporting the longitudinal tubes 13 and the transverse tube 14 on a platform 1 of the platform truck. The telescopic units 2 can be moved between an extended position and a shrunk position so that the collapsible framework can be moved between an extended position as shown in FIG. 1 and a collapsed position as shown in FIG. 2. There can be used several crossbars extending between the longitudinal tubes 13 to enhance the collapsible framework.

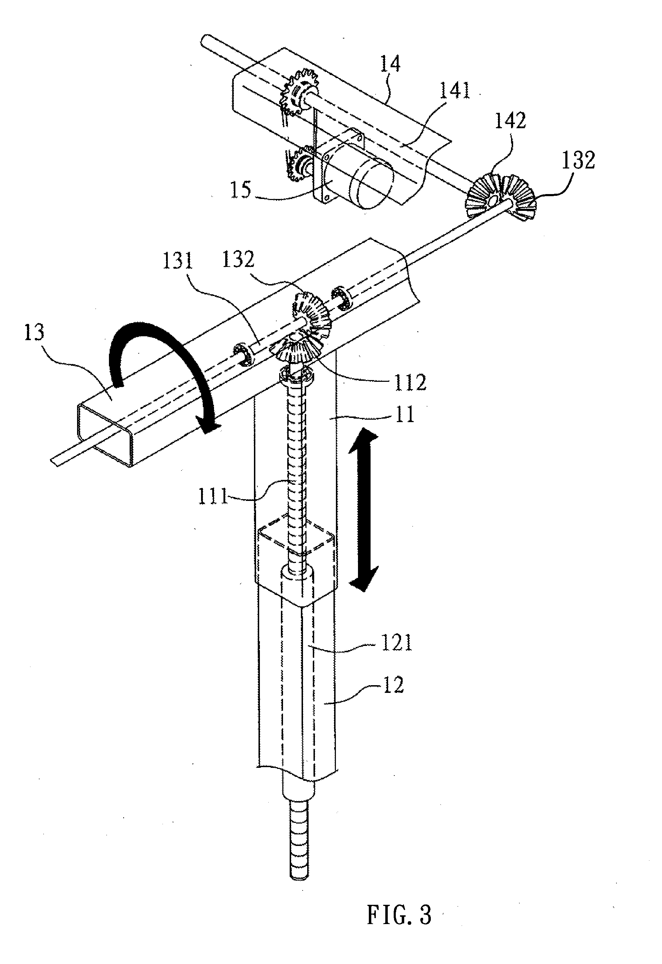

Referring to FIG. 3, each of the telescopic units 2 includes an external tube 11 and an internal tube 12. A lower end of the external tube 11 receives an upper end of the internal tube 12. A lower end of the internal tube 12 is secured to the platform. A threaded bolt 111 is rotationally but non-movably located in the external tube 11 and the internal tube 12. A threaded sheath 121 is securely located in the internal tube 11. A thread formed on the threaded bolt 111 is engaged with a thread formed on an internal side of the threaded sheath 121. The external tube 11 is moved up and down on the internal tube 12 when the threaded bolt 111 is spun and moved relative to the threaded sheath 121.

To rotate the threaded bolt 111 relative to the threaded sheath 121, there are used a motor 15, a transverse axle 141 and two longitudinal axles 131. The motor 15 is provided near or on an external or internal side of the transverse tube 14. The transverse axle 141 is rotationally located in the transverse tube 14. A chain is provided around a sprocket secured to a mandrel of the motor 15 and a sprocket is securely provided around the transverse axle 141. Thus, the transverse axle 141 can be spun with the motor 15.

An angle gear 132 secured to a front end of each of the longitudinal axles 131 is engaged with an angle gear 142 secured to each end of the transverse axle 141. Thus, the longitudinal axles 131 can be spun with the transverse axle 141.

An angle gear 112 secured to an upper end of a related one of the threaded bolts 111 is engaged with an angle gear 132 securely provided around another portion of each of the longitudinal axles 131. Thus, the threaded bolts 111 can be spun with the longitudinal axles 131. Therefore, the telescopic units 2 can be extended and shrunk.

Referring to FIG. 3A, there is shown a collapsible framework according to a second embodiment of the present invention. The second embodiment is like the first embodiment except two things. Firstly, a worm 134 is used instead of each of the longitudinal axles 131. Secondly, a bevel gear 114 is used instead of each of the angle gears 112. The bevel gears 114 are engaged with the worms 134.

Referring to FIG. 3B, there is shown a collapsible framework according to a third embodiment of the present invention. The third embodiment is identical to the first embodiment except several things. Firstly, two pulleys 150 (only one is seen) are secured to the mandrel of the motor 15. Secondly, two cables 143 are used instead of the transverse axle 141. Thirdly, a pair of pulleys 136 is used instead of each of the angle gears 142 and the related angle gear 132. Fourthly, a series of cables 135 is used instead of each of the longitudinal axles 131. Fifthly, a pair of pulleys 136 is used instead of each of the angle gears 132 and the related angle gear 112. Each of the cables 143 is wound around a related one of the pulleys 150 and a related one of the pairs of pulleys 136. Each of the cables 135 is wound around two adjacent ones of the pairs of pulleys 136.

Referring to FIG. 3C, there is shown a collapsible framework according to a fourth embodiment of the present invention. The fourth embodiment is like the third embodiment except four things. Firstly, a sprocket 152 is used instead of the pulleys 150. Secondly, a chain 145 is used instead of the cables 143. Thirdly, a pair of sprockets 138 is used instead of each pair of pulleys 136. Fourthly, a chain 137 is used instead of each of the cables 135.

Referring to FIG. 3D, there is shown a collapsible framework according to a fifth embodiment of the present invention. The fifth embodiment is like the third embodiment except two things. Firstly, a belt 143 is used instead of each of the cables 143. Secondly, a belt 135 is used instead of each of the cables 135.

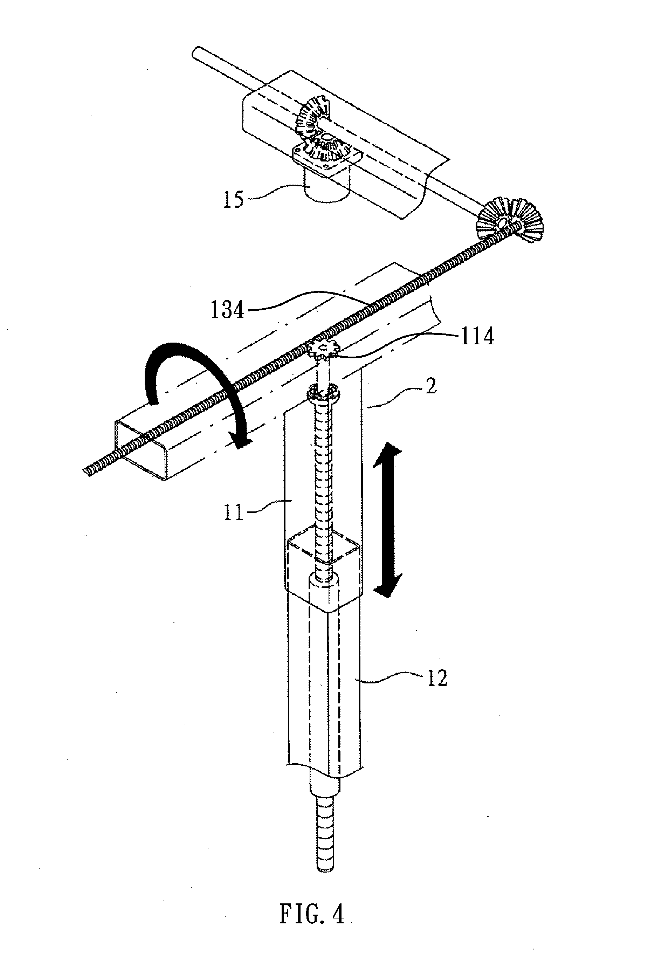

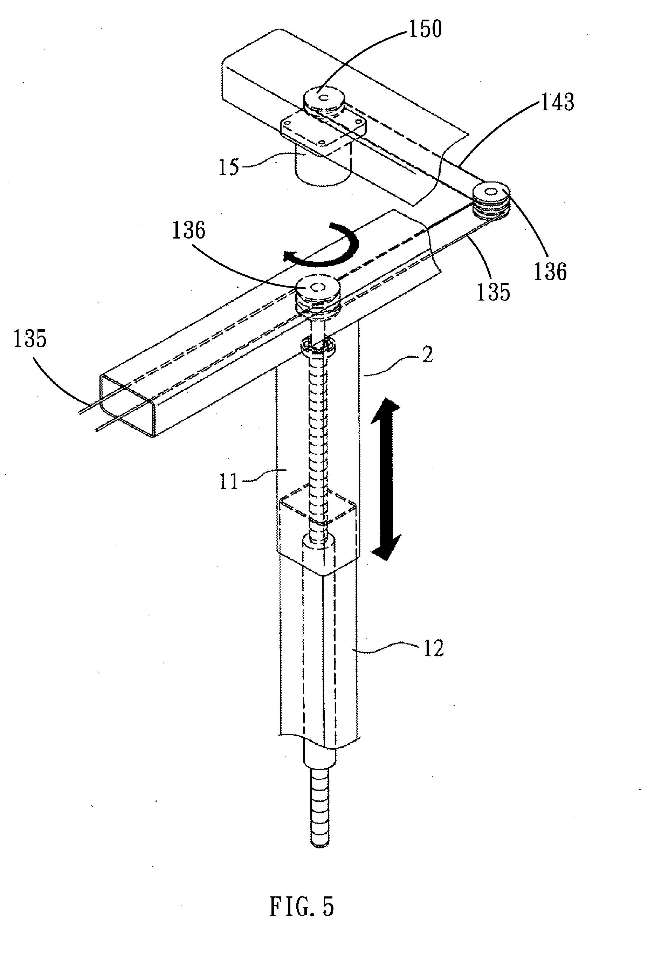

Referring to FIGS. 4 and 5, there is shown a collapsible framework according to a sixth embodiment of the present invention. The sixth embodiment is like the first embodiment except including collapsible curtain frames and a collapsible canopy frame. The collapsible canopy frame is like the curtain frames except the location and size. Hence, the following description will be given to the curtain frames only. Each of the curtain frames includes two tracks 21, several bars 23, several four-linked units 24 and pairs of slides 25. Each of the racks 21 is secured to a related one of the external tubes 11. Each of the bars 23 is supported on the racks 21 with the slides 25. At least one of the four-linked units 24 is provided between any two adjacent ones of the bars 23. The curtain frames can be moved between an extended position as shown in FIG. 4 and a collapsed position as shown in FIG. 5.

To render the movement of each of the curtain frames smooth, a partition 16 is pivotally connected to the lowermost one of the bars 23. Thus, the partitions 16 are movable with the curtain frames. The partitions 16 keep cargo from the curtain frames. The partitions 16 can be lifted to facilitate the uploading and downloading of the cargo.

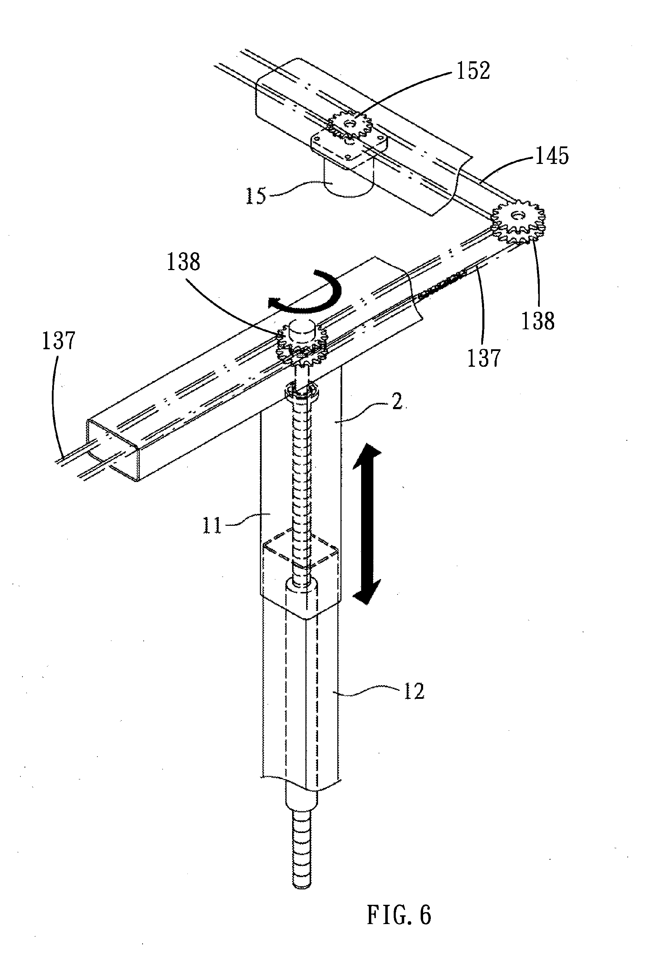

Referring to FIG. 6, each end of each of the bars 23 is inserted in a tubular portion extending from a related one of the slides 25. At least one pulley 26 is connected to each of the slides 25. A motor 31 and an axle 32 is located in a related one of the longitudinal tubes 13. The motor 31 is operatively connected to the axle 32 through two sprockets and a chain. Each of the slides 25 that support the lowermost bar 23 is secured to a cable or belt 33 with two tabs 27 and screws.

In use, the motor 31 is energized to spin the axle 32. The axle 32 drives the cables 33. The cables 33 move the lowermost bar 23, which are supported on the lowermost pair of slides 25. The lowermost bar 23 moves the other bars 23 through the four-linked units 24. Thus, the curtain frames are movable between the extended position and the collapsed position.

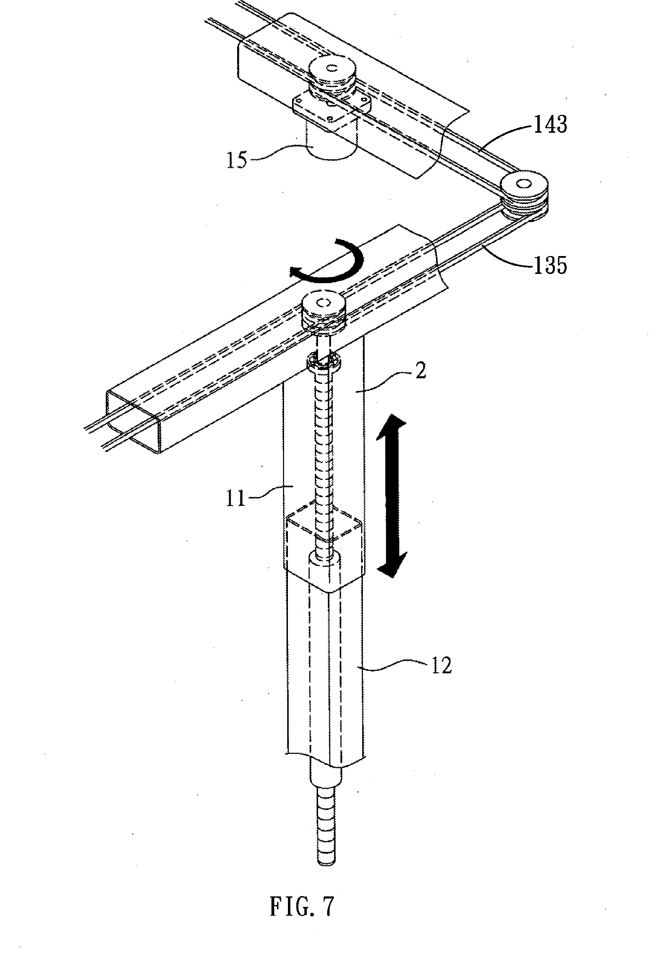

Referring to FIG. 7, there is shown a collapsible framework according to a seventh embodiment of the present invention. The seventh embodiment is like the sixth embodiment except including a fixed canopy frame instead of the collapsible canopy frame. The fixed canopy frame includes a plurality of beams 17.

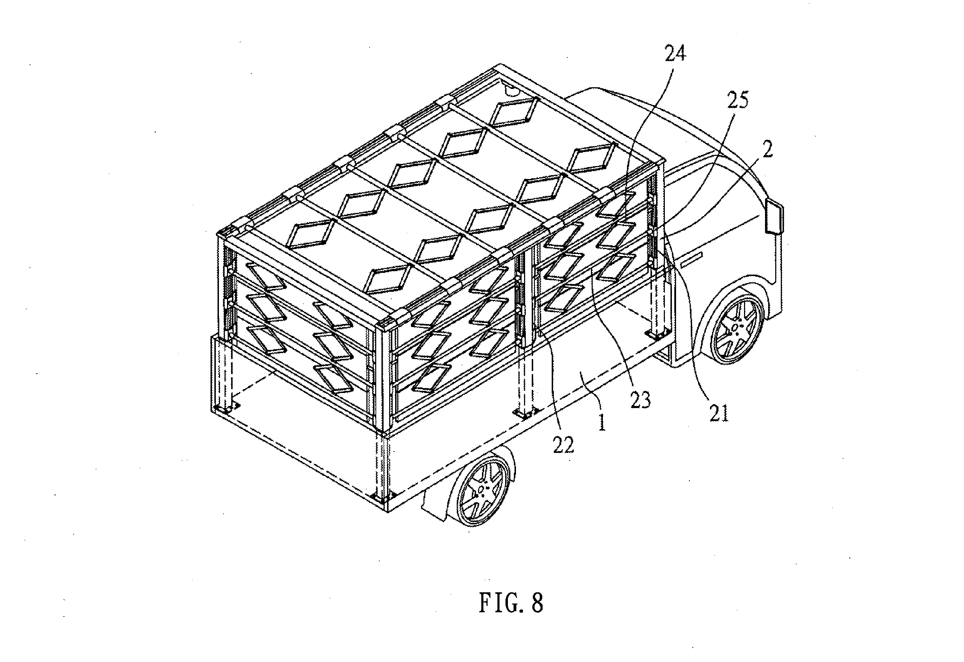

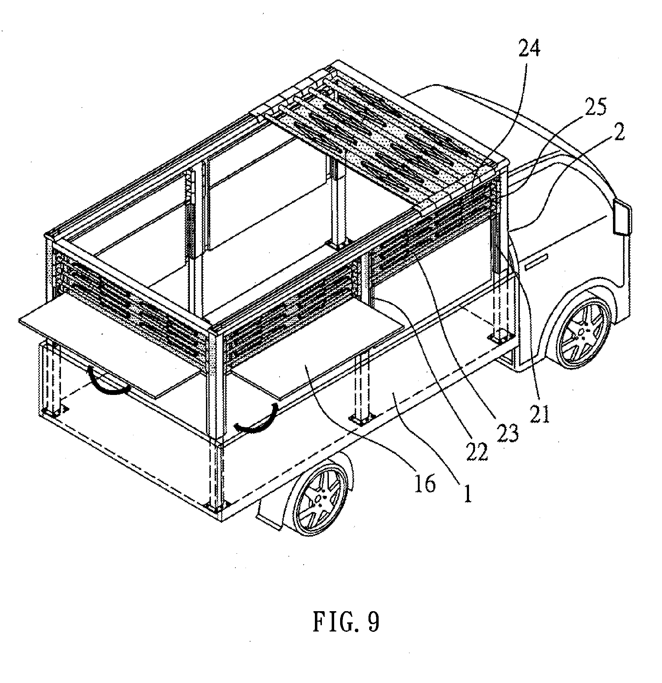

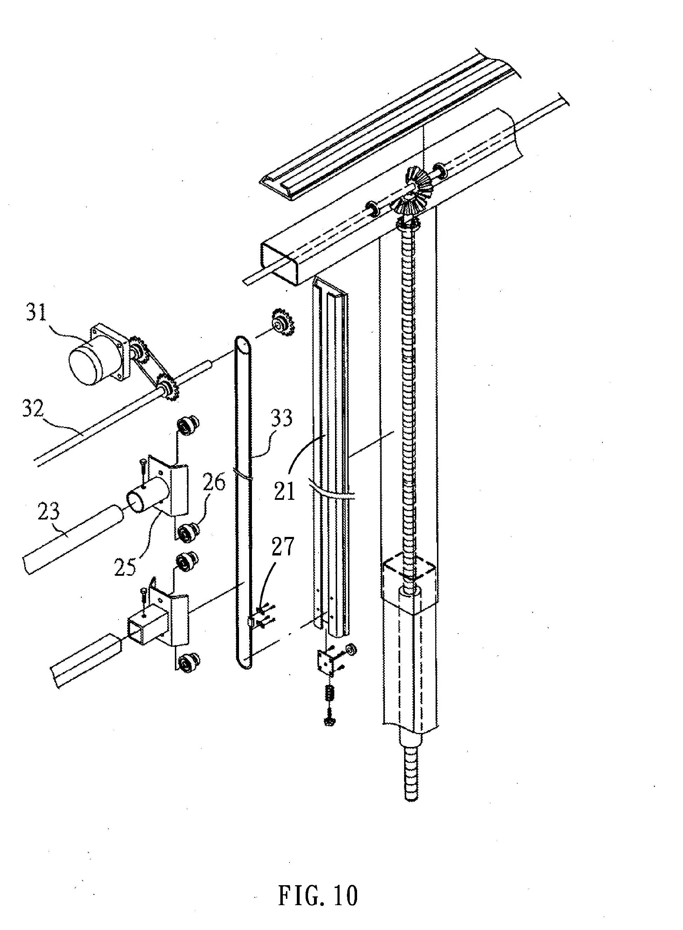

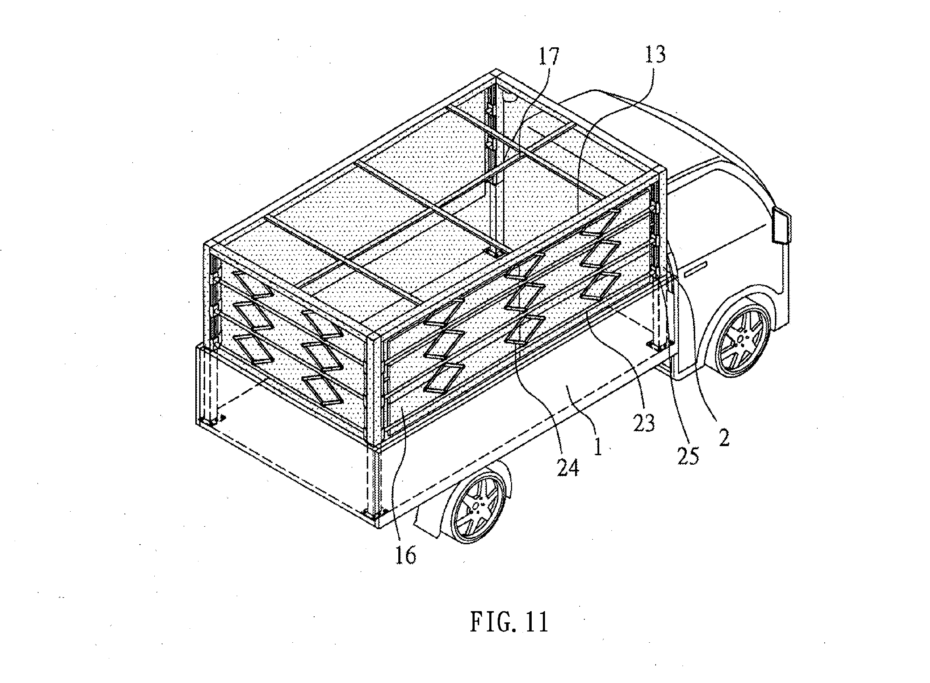

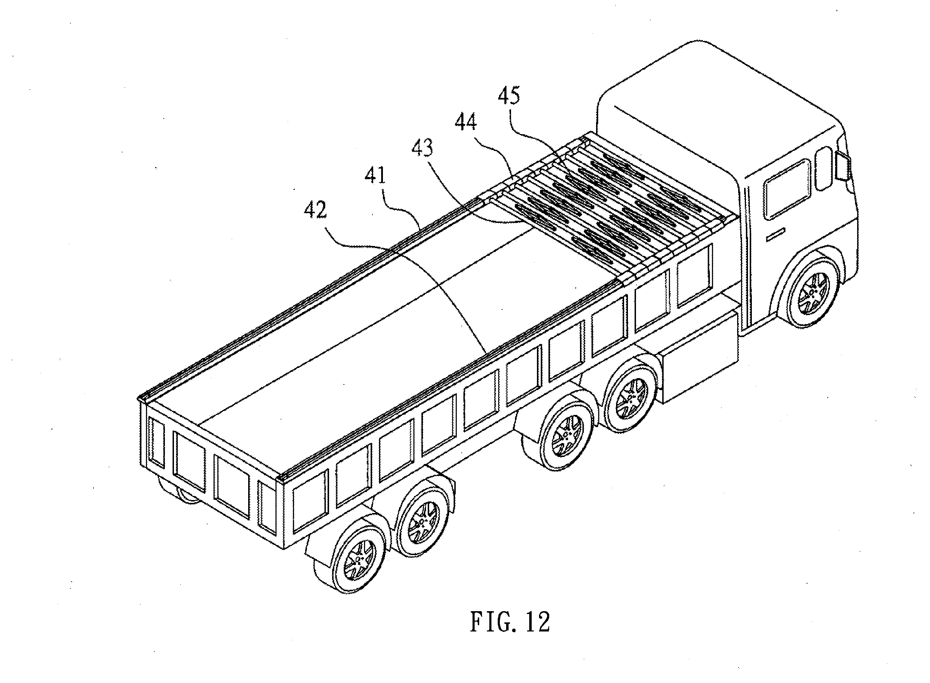

Referring to FIG. 8, there is shown a collapsible framework according to an eighth embodiment of the present invention adapted for a trailer particularly used for transporting sand. The seventh embodiment is like the sixth embodiment except omitting the telescopic units 2 and the curtain frames. The eighth embodiment includes tracks 41 and 42 like the tracks 21, several bars 43 like the bars 23, several slides 44 like the slides 25 and four-linked units 45 like the four-linked units 24.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A multifunctional framework of a folding top for protectively covering cargo loaded on a platform of a truck while facilitating the upload and download of the cargo, **characterized in that:**
at least two telescopic units (2) are provided on each side of the platform, wherein each of the telescopic units (2) includes an external tube (11) and an internal tube (12), wherein the external tubes (11) on each side of the platform are connected to each other by a longitudinal tube (13), wherein the first external tube (11) on a side of the platform is connected to the first external tube (11) on the other side of the platform by a transverse tube (14), wherein a transverse axle (141) is inserted in the transverse tube (14) and provided with an angle gear (142) engaged with an angle gear (132) provided on a longitudinal axle (131) inserted in each of the longitudinal tubes (13), wherein each of the longitudinal axles (131) is provided with an angle gear (132) engaged with an angle gear (112) provided on a threaded bolt (111) inserted in each of the external tubes (11), wherein a lower section of each of the threaded bolts (111) is engaged with a threaded tube (121) fit in an upper section of a related one of the internal tubes (12), wherein a motor (15) is located on a side of the transverse tube (14) and used to drive the transverse axle (141) to simultaneously rotate the longitudinal axles (131), thus moving the external tubes (11) up and down relative to the internal tubes (12), thus lifting and lowering the entire framework according to the amount of the cargo.

2. The multifunctional framework according to claim 1, wherein the motor is used with sprockets and chains for moving the external tubes (11) up and down relative to the internal tubes (12), thus lifting and lowering the entire framework.

3. The multifunctional framework according to claim 1, wherein the motor cooperates with pulleys to drive belts for moving the external tubes (11) up and down relative to the internal tubes (12), thus lifting and lowering the entire framework.

4. The multifunctional framework according to claim 1, wherein the motor cooperates with pulleys to drive cables for moving the external tubes (11) up and down relative to the internal tubes (12), thus lifting and lowering the entire framework.

5. The multifunctional framework according to claim 1, wherein the motor drives threaded bolts for moving the external tubes (11) up and down relative to the internal tubes (12), thus lifting and lowering the entire framework.

6. A multifunctional framework of a folding top for protectively covering cargo loaded on a platform of a truck while facilitating the upload and download of the cargo, **characterized in that:**
at least two telescopic units (2) are provided on each side of the platform, wherein each of the telescopic units (2) includes an external tube (11) and an internal tube (12), wherein the external tubes (11) on each side of the platform are connected to each other by a longitudinal tube (13), wherein the first external tube (11) on a side of the platform is connected to the first external tube (11) on the other side of the platform by a transverse tube (14), wherein a transverse axle (141) is inserted in the transverse tube (14) and provided with an angle gear (142) engaged with an angle gear (132) provided on a longitudinal axle (131) inserted in each of the longitudinal tubes (13), wherein each of the longitudinal axles (131) is provided with an angle gear (132) engaged with an angle gear (112) provided on a threaded bolt (111) inserted in each of the external tubes (11), wherein a lower section of each of the threaded bolts (111) is engaged with a threaded tube (121) fit in an upper section of a related one of the internal tubes (12), wherein a motor (15) is located on a side of the transverse tube (14) and used to drive the transverse axle (141) to simultaneously rotate the longitudinal axles (131), thus moving the external tubes (11) up and down relative to the internal tubes (12), thus lifting and lowering the entire framework according to the amount of the cargo, wherein a door frame is provided on each of the top, rear and flanks of the framework, wherein each of the door frames includes two tracks (21) each connected to a related one of the external tubes (11), bars (23) movable on the tracks (21), and at least one four-linked unit (24) provided between any two adjacent ones of the bars (23), wherein a motor is used with axles (32) and cables (33) to move pulleys (26) attached to slides (22) connected to the ends of the bars (23) to extend and withdraw canvas provided on each of the door frames, wherein the framework can be moved up and down while the door frames can be extended and withdrawn as needed for the upload and download of the cargo.

7. The multifunctional framework according to claim 6, wherein a partition (16) is connected to the external tubes (11) on each side of the platform so that the partition (16) is movable up and down with the external tubes (11), thus preventing the door frame from being jammed, wherein the partitions (16) can be lifted to facilitate the upload and download of the cargo.

8. The multifunctional framework according to claim 6, wherein each of the door frames can be replaced with a rolling door or a set of plates inserted in one another.

9. The multifunctional framework according to claim 6, wherein the extension and withdrawal of the door frame is done by chains, belts, cables or threaded bolts.

10. A multifunctional framework of a folding top for protectively covering cargo loaded on a platform of a truck while facilitating the upload and download of the cargo, **characterized in that:**
at least two telescopic units (2) are provided on each side of the platform, wherein each of the telescopic units (2) includes an external tube (11) and an internal tube (12), wherein the external tubes (11) on each side of the platform are connected to each other by a longitudinal tube (13), wherein the first external tube (11) on a side of the platform is connected to the first external tube (11) on the other side of the platform by a transverse tube (14), wherein a transverse axle (141) is inserted in the transverse tube (14) and provided with an angle gear (142) engaged with an angle gear (132) provided on a longitudinal axle (131) inserted in each of the longitudinal tubes (13), wherein each of the longitudinal axles (131) is provided with an angle gear (132) engaged with an angle gear (112) provided on a threaded bolt (111) inserted in each of the external tubes (11), wherein a lower section of each of the threaded bolts (111) is engaged with a threaded tube (121) fit in an upper section of a related one of the internal tubes (12), wherein a motor (15) is located on a side of the transverse tube (14) and used to drive the transverse axle (141) to simultaneously rotate the longitudinal axles (131), thus moving the external tubes (11) up and down relative to the internal tubes (12), thus lifting and lowering the entire framework according to the amount of the cargo, wherein a door frame is provided on each of the rear and flanks of the framework, wherein each of the door frames includes two tracks (21) each connected to a related one of the external tubes (11), bars (23) movable on the tracks (21), and at least one four-linked unit (24) provided between any two adjacent ones of the bars (23), wherein a motor is used with axles (32) and cables (33) to move pulleys (26) attached to slides (22) connected to the ends of the bars (23) to extend and withdraw canvas provided on each of the door frames, wherein the framework can be moved up and down while the door frames can be extended and withdrawn based on needs of the upload and download of the cargo.

11. The multifunctional framework according to claim 10, wherein a partition (16) is connected to the external tubes (11) on each side of the platform so that the partition (16) is movable up and down with the external tubes (11), thus preventing the door frame from being jammed, wherein the partitions (16) can be lifted to facilitate the upload and download of the cargo.

12. The multifunctional framework according to claim 10, wherein each of the door frames can be replaced with a rolling door or a set of plates inserted in one another.

13. The multifunctional framework according to claim 10, wherein the extension and withdrawal of the door frame is done by chains, belts, cables or threaded bolts.

14. A multifunctional framework of a folding top for protectively covering cargo loaded on a platform of a truck while facilitating the upload and download of the cargo, **characterized in that:**
a track (41) is provided along an upper edge of each flank of the platform, wherein bars (43) are located transversely between the tracks (41) by slides (44) attached to the ends thereof, wherein a four-linked unit (45) is provided between any two adjacent ones of the bars (43) so that the bars (43) are connected to one another, wherein a motor is used to move the bards (43) and the four-linked units (45) on the tracks (41) to and fro so that the folding top can be extended to cover the cargo.

15. The collapsible framework according to claim 14, wherein the extension and withdrawal of the framework is done by chains, belts, cables or threaded bolts.
